# EUROPEAN PATENT SPECIFICATION

(11) **EP 2 098 631 B1**
(45) Date of publication and mention of the grant of the patent: **04.06.2014**
(21) Application number: 07860606.8
(22) Date of filing: 27.12.2007
(51) Int. Cl.: D06M 15/267, D06M 13/175, D06M 13/224, D06M 15/356, D06M 15/29, D06M 15/327, D06M 15/263, D06M 15/285, C08F 220/34, C08F 220/60, C08F 220/04, C08F 220/18, C08F 220/56, C11D 3/37, D06M 13/00

(54) **FIBER TREATING AGENT**
FASERBEHANDLUNGSMITTEL
AGENT DE TRAITEMENT DES FIBRES

(30) Priority: 28.12.2006 JP 2006356106; 19.11.2007 JP 2007299108; 19.11.2007 JP 2007299109
(43) Date of publication of application: 09.09.2009
(73) Proprietor: Kao Corporation, Chuo-Ku Tokyo 103-8210 (JP)
(72) Inventor: YAMAGUCHI, Noriko, Wakayama-shi Wakayama 640-8580 (JP); SHIGEHISA, Makiko, Wakayama-shi Wakayama 640-8580 (JP); OSUMI, Takahiro, Wakayama-shi Wakayama 640-8580 (JP)
(74) Representative: HOFFMANN EITLE
(86) International application number: PCT/JP2007/075411
(87) International publication number: WO 2008/081995

(56) References cited:
- WO-A1-98/28339
- WO-A1-2004/041232
- JP-A- 06 228 871
- JP-A- 06 228 883
- JP-A- 2001 181 354
- JP-A- 2004 500 451
- JP-A- 2005 528 538
- US-A1- 2005 053 569

## Description

### Field of the invention

The present invention relates to a fiber treating agent.

### Background of the invention

Perfumes have been commonly used in toiletry products such as softening agents (e.g., JP-A2004-211215, JP-A2004-211230, and JP-A8-13335). Recently, there has been a growing interest in scent, and technique of leaving scent on clothing items after washing and/or softening treatment, or imparting a perfume-remaining property has been developed. Techniques of imparting a perfume-remaining property to leave scent on a clothing item after treatment have also been known (e.g., JP-A2004-131680, JP-A2004-143638, and JP-A2004-210959).

In order to leave more amount of scent presenting in a washing bath, a technique of formulating a much amount of perfume having high ClogP into a perfume formulation (JP-B3102893) has also been known. However, perfumes having high ClogP are in a minority from the number of whole perfumes and are often expensive.

It is desirable to effectively add a perfume having high ClogP to fiber products. Further, it is also desirable that a scent of an added perfume having high ClogP lasts.

In addition, use of a perfume having high ClogP cannot really satisfy users needing fragrance, because fragrance of a dried fiber product is monotonous. Considering diversity of fragrance, since there are many perfumes having ClogP within the range from 2 to 4, it is desirable to effectively add a perfume in the range to fiber products.

JP-A2005-511726 describes use of a specific block copolymer to help adsorption of an emulsion on a surface, but does not describe use of a perfume ingredient applicable to clothing. In JP-A2006-515029, a perfume polymer particle containing a polymer and a perfume is disclosed. The technique is for preventing release of the perfume by making the perfume being adsorbed on the polymer, and is not intended to increase an adsorbed amount of perfume on clothing and the like.

WO 2004/041232 relates to a perfume polymeric particle comprising a polymer and a perfume comprising a perfume raw material having a Kovats Index value of from 1000 to 1400 wherein a response factor of the perfume polymeric material is at least 1.5, as measured by Longevity Test Protocols I or II.

US 2005/0053569 describes a block copolymer comprising at least one nonionic hydrophobic block and at least one block containing cationic units which are used to assist the deposition of an emulsion on a surface.

The present invention is a fiber treating agent containing (2a) a polymer compound containing (A) a monomer unit derived from a compound represented by the formula (1), or an acid salt or a quaternary salt thereof and (2-B) a monomer unit derived from a compound represented by the formula (2-2) in a molar ratio of (A)/(2-B) = 10/90 to 99/1; and (2b) a perfume component having ClogP of more than 4 and 7 or less: 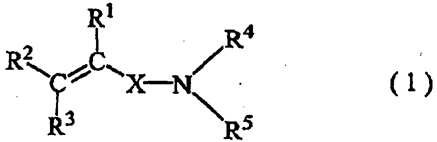 (in the formula (1), R¹ and R² each independently represent a hydrogen atom or a methyl group; R³ represents -COOM (M is a hydrogen atom or an alkali metal atom) or a hydrogen atom; X represents -COO-R⁶-, -CONR⁷-R⁸-, or -CH₂-; R⁴ represents, when X is -CH₂-, a group represented by the formula (3): 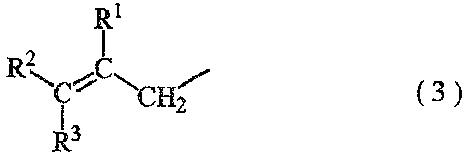 or, when X is one of the other groups, an alkyl group having 1 to 3 carbon atoms or a hydroxyalkyl group having 1 to 3 carbon atoms; R⁵ represents an alkyl group having 1 to 3 carbon atoms, a hydroxyalkyl group having 1 to 3 carbon atoms, or a hydrogen atom; R⁶ and R⁸ each independently represent an alkylene group having 2 to 3 carbon atoms; and R⁷ represents a hydrogen atom or an alkyl group having 1 to 3 carbon atoms.) 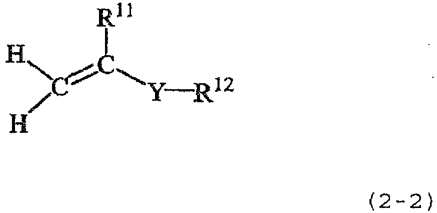 (wherein, R¹¹ represents a hydrogen atom or an alkyl group having 1 to 3 carbon atoms; Y represents -O-CO-, -COO-, or -CONR¹³-(R¹³ represents a hydrogen atom or an alkyl group having 1 to 3 carbon atoms); and R¹² represents an alkyl or alkenyl group having 6 to 22 carbon atoms.)

The present invention is a method of facilitating adsorption of perfume, including treating a fiber product with the fiber treating agent.

The present invention is a method for treating a fiber product, including adding a perfume component (2b) having ClogP of more than 4 and 7 or less to the fiber product, to facilitate adsorption of the perfume component (2b) having ClogP of more than 4 and 7 or 1 ess on the fiber product, simultaneously with, or after a pre-treatment with, a polymer compound (2a) containing (A) a monomer unit derived from a compound represented by the formula (1), or an acid salt or a quaternary salt thereof and (2-B) a monomer unit derived from a compound represented by the formula (2-2) in a molar ratio of (A)/(2-B) = 10/90 to 99/1: 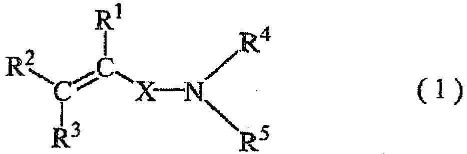 (in the formula (1), R¹ and R² each independently represent a hydrogen atom or a methyl group; R³ represents -COOM (M is a hydrogen atom or an alkali metal atom) or a hydrogen atom; X represents -COO-R⁶-, -CONR⁷-R⁸-, or -CH₂-; R⁴ represents, when X is -CH₂-, a group represented by the formula (3): 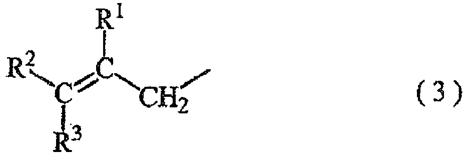 or, when X is one of the other groups, an alkyl group having 1 to 3 carbon atoms or a hydroxyalkyl group having 1 to 3 carbon atoms; R⁵ represents an alkyl group having 1 to 3 carbon atoms, a hydroxyalkyl group having 1 to 3 carbon atoms, or a hydrogen atom; R⁶ and R⁸ each independently represent an alkylene group having 2 to 3 carbon atoms; and R⁷ represents a hydrogen atom or an alkyl group having 1 to 3 carbon atoms); 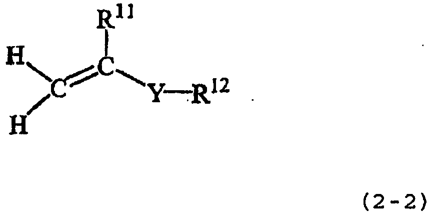 (wherein, R¹¹ represents a hydrogen atom or an alkyl group having 1 to 3 carbon atoms; Y represents -O-CO-, -COO-, or -CONR¹³- (R¹³ represents a hydrogen atom or an alkyl group having 1 to 3 carbon atoms) ; and R¹² represents an alkyl or alkenyl group having 6 to 22 carbon atoms.)

The present invention is a softening composition containing the polymer compound (2a), the perfume component (2b) having ClogP of more than 4 and 7 or less, and a softening agent.

### Detailed description of the invention

The present invention provides a fiber treating agent capable of effectively adding a perfume component having high ClogP, in particular a perfume component having ClogP of more than 4 and 7 or less to a fiber product, and capable of long-lasting fragrance of the perfume component.

The component (2a) will be described below.
Common matters shared by them are described as for a component (a). The component (2b) will be described below.
Common matters shared by them are described as for a component (b). The component (2-B) will be described below.
Common matters shared by them are described as for (B).

### <Components (1a) and (2a) >

Examples of a compound represented by the formula (1) in which X is -COO-R⁶- from which compound the monomer unit (A) is derived include N,N-dimethylaminoethyl acrylate, N,N-dimethylaminomethyl acrylate, N,N-dimethylaminobutyl acrylate, N,N-dimethylaminopropyl acrylate, N,N-dimethylaminoethyl methacrylate, N,N-dimethylaminomethyl methacrylate, N,N-dimethylaminobutyl methacrylate, N,N-dimethylaminopropyl methacrylate, N,N-diethylaminoethyl acrylate, N,N-diethylaminomethyl acrylate, N,N-diethylaminobutyl acrylate, N,N-diethylaminopropyl acrylate, N,N-diethylaminoethyl methacrylate, N,N-diethylaminomethyl methacrylate, N,N-diethylaminobutyl methacrylate, and N,N-diethylaminopropyl methacrylate.

Examples of a compound represented by the formula (1) in which X is -CONR⁷-R⁸- include N,N-dimethylaminopropyl(meth)acrylic acid amide, N,N-dimethylaminomethyl(meth)acrylic acid amide, N,N-dimethylaminoethyl(meth)acrylic acid amide, and N,N-dimethylaminobutyl(meth)acrylic acid amide.

When X in the formula (1) is -CH²-, R⁴ is a group represented by the formula (3). Examples of the compound include diallylamine and diallylmethylamine.

Acid salts and quaternary salts of compounds represented by the formula (1) can be used. Examples of the acid salt include neutralized acid salts such as sulfate and hydrochloride salts of primary, secondary, and tertiary amines, and neutralized salts of organic acids. Examples of the quaternary salt include C₁₋₃ alkyl halide salts and C₁₋₃ alkylsulfates. Examples of the quaternary salt include N,N,N-trimethyl-N-(2-methacryloyloxyethyl)ammonium chloride, N,N-dimethyl-N-ethyl-N-(2-methacryloyloxyethyl) ammonium ethyl sulfate, and diallyldimethylammonium chloride. These compounds are commercially available from, for example, MRC Unitec Co.Ltd., under trade names of QDM and MOEDES.

Examples of the compound represented by the formula (2-2) from which the monomer unit (2-B) is derived include alkyl (having 6 to 22 carbon atoms) acrylates such as octyl acrylate, and alkyl (having 6 to 22 carbon atoms) methacrylates such as lauryl methacrylate and stearyl methacrylate. In particular, to achieve sufficient adsorption effect of the perfume having ClogP of more than 4 and 7 or less, the present invention uses compounds represented by the formula (2-2) in which R¹² is a liner or branched alkyl or alkenyl group having 6 to 22 carbon atoms, preferably a liner or branched alkyl group having 6 to 22 carbon atoms, and more preferably a liner or branched alkyl group having 12 to 22 carbon atoms.

The component (a) may include a monomer unit (monomer unit (C)) derived from a copolymerizable monomer having an unsaturated bond (monomer (C)) as the other monomer unit than monomer units (A) and (B) within the range that does not impair the effect of the present invention. Examples of the monomer (C) include acrylamide, vinyl alcohol; (meth)acrylates and (meth)acrylamides having a hydroxyalkyl group having 1 to 22 carbon atoms such as hydroxyethyl (meth)acrylate and hydroxypropyl(meth)acrylamide; (meth)acrylates having a polyalkyleneoxide chain (an alkylene group has 1 to 8 carbon atoms; liner or branched) such as polyethylene glycol (meth)acrylate, methoxypolyethylene glycol (meth)acrylate, lauroxy polyethylene glycol (meth)acrylate (polymerization degree of ethylene glycol: 1 to 100), polypropylene glycol (meth)acrylate (polymerization degree of propylene glycol: 1 to 50), polybutylene glycol (meth)acrylate (polymerization degree of butylene glycol:1 to 50); (meth)acrylates of polyhydric alcohols such as glycerin (meth)acrylate; diacetone (meth)acrylamide; N-vinyl cyclic amide such as N-vinylpyrrolidone; N-(meth)acroylmorpholine; vinyl chloride; acrylonitrile; vinyl compounds having a carboxy group such as (meth) acrylic acid, maleic acid, itaconic acid, and styrenecarboxylic acid; and vinyl compounds having a sulfonic acid group such as 2-acrylamide-2-methylpropanesulfonic acid, and styrenesulfonic acid. A copolymerization amount of the monomer (C) is 80% or less by mass, preferably 50% or less by mass, and more preferably 30% or less by mass to the total amount of monomers.

The component (a) contains the monomer unit (A) and the monomer unit (B) in a molar ratio of (A)/(B) = 10/90 to 99/1, and from the viewpoint of perfume-remaining property of the component (b), preferably 20/80 to 99/1, more preferably 40/60 to 80/20, and even more preferably 50/50 to 70/30.

A weight average molecular weight (Mw) of the component (a) is preferably 2,000 to 200,000, more preferably 3,000 to 150,000, and even more preferably 5,000 to 100,000. A ratio of Mw to Mn (number average molecular weight), Mw/Mn, is preferably 1.0 to 40, and more preferably 1.5 to 35.

In the present invention, values of Mw, Mn, and Mw/Mn of the component (a) are obtained by gel permeation chromatography (GPC) measurement and used. As for an eluent, used is any of water, alcohol, chloroform, dimethylformamide, tetrahydrofuran, acetonitrile, and a combination of these solvent. A molecular weight is calculated based on polyethylene oxide or polystyrene.

In measurement, when a polymer to be measured contains a much percentage of monomer unit (A) and is considered to be relatively hydrophilic, 50 mmol/L LiBr solution in a mixed solvent of (1% acetic acid/ethanol) :water =3:7(weight ratio) is used as a solvent, two GPC columns for polar solvent "α-M (Tosoh Corporation)" are used in tandem, and a molecular weight is calculated based on polyethylene glycol (measurement method A). When the monomer unit (B) accounts for a major percentage and a polymer is considered to be relatively hydrophobic, 1 mmol/L Farmin DM20 (Kao Corporation) solution in CHCl₃ is used as a solvent, two GPC columns for organic solvent "K-804 (Showa Denko K.K.)" are used in tandem, and a molecular weight is calculated based on polystyrene (measurement method B).

As used herein, logP is a parameter representing affinity of an organic compound to water and 1-octanol. 1-octanol/water partition coefficient P is a ratio of concentrations of the compound in two phases of solvents, 1-octanol and water, at equilibrium, when a small amount of compound is dissolved in a mixture of these two solvents. P is generally represented as a base 10 logarithm thereof.

For many compounds, logP values have been reported and provided on databases such as those available from Daylight Chemical Information Systems, Inc. (Daylight CIS), which are referable. When a compound has no logP value measured, a logP value thereof can be very conveniently calculated using a program "CLOGP" available from Daylight CIS. The program outputs a "calculated logP (ClogP)" using a Hansch-Leo fragmental approach together with an actual logP value if presents.

The fragmental approach is based on a chemical structure of compound and takes the number of atoms and a type of chemical bonding into accounts (cf. A. Leo, Comprehensive Medicinal Chemistry, Vol.4, C. Hansch, P. G. Sammens, J. B. Taylor and C. A. Ramsden, Eds., P.295, Pergamon Press, 1990). The ClogP value is the most versatile and reliable estimate at present, and thus can be used for selecting a compound instead of a measured logP value. In the present invention, in the case of presenting a measured logP, it is used, and in the other case, a calculated ClogP value using a program CLOGPv4.01 is used.

### <component (2b) >

The fiber treating agent of the present invention contains the perfume component (2b) (component (2b)) having ClogP of more than 4 and 7 or less.

Examples of the perfume having ClogP of more than 4 and 7 or less include the following perfume components:
p-t-B. C. H. A, BENZYL SALICYLATE, DAMASCENONE, LIMONENE, TERPINOLENE, ALDEHYDE C-11, HEXYL CINNAMIC ALDEHYDE, PATCHOULI ALCOHOL, AMBROXAN, PEARLIDE, PENTALIDE, CELESTOLIDE, MUSCONE, TENTAROME, AMYL CINNAMIC ALDEHYDE, CEDAR ALCOHOL, LILIAL, CYCLAMEN ALDEHYDE, TIMBEROL, ALDEHYDE C-13, BOISAMBRENE FORTE, CELESTOLIDE, GERANYL PHENYL ACETATE, CEDRYL METHYL ETHER, VETIVERYL ACETATE, HEXYL SALICYLATE, p-CYMENE, FARNESOL, GERANYL n-BUTYRATE, TETRAHYDRO GERANYL ACETATE, ROSEPHENONE, CINNAMYL CINNAMATE, ETHYLENE BRASSYLATE, NEROLIDOL, GERANYL iso-BUTYRATE, iso-AMYL SALICYLATE, ACETYL CEDRENE COEUR, and BENZYL CINNAMATE.

The component (2b) may be used as a perfume composition (2b') (hereinafter, referred to as the component (2b')) containing the perfume component (2b) having ClogP of more than 4 and 7 or less in an amount of 20 to 60% by mass. In this case, the perfume composition containing a perfume component having ClogP of 4 or less and a perfume component having ClogP of more than 7, as well as the component (2b). Examples of the perfume having ClogP of 4 or less include the following perfume components:
RASPBERRY KETONE, BENZYL ALCOHOL, HELIOTROPINE, VANILLIN (L), COUMARIN, HYDROXY CITRONELLOL, and HYDROXY CITRONELLAL.

Examples of the perfume having ClogP of more than 7 include the following perfume components:
PHYTOL, iso-PHYTOL, ETHYL PALMITATE, and ORANILE.

### <fiber treating agent>

Examples of a method of using the fiber treating agent of the present invention include a method of treating fibers on which at least a part of the component (a) of the present invention is attached in a treatment bath prepared with a composition containing a perfume, and a method of treating in a treatment bath prepared with the fiber treating agent containing the components (a) and (b) of the present invention. In other words, the fiber treating agent of the present invention is applicable to fiber treating agents to be diluted for use. Examples of the agent include detergents, softening agents, bleaches, and starches.

### [Detergent composition]

The detergent composition of the present invention contains the components (a) and (b) of the present invention as essential components. A content of the component (a) in the detergent composition is preferably 0.1 to 20% by mass, more preferably 0.2 to 15% by mass, and even more preferably 0.5 to 10% by weight. A content of the component (b) is preferably 0.1 to 2.0% by mass, and more preferably 0.3 to 1.0% by mass.

The detergent composition of the present invention is used as a detergent for cleaning clothing and the like, and can contain ingredients conventionally formulated in detergent compositions such as a surfactant, a builder, an alkali agent, and a bleach, as well as the components (a) and (b).

Examples of the surfactant used in the present invention include anionic surfactants, nonionic surfactants, amphoteric surfactants, and cationic surfactants.

Preferred surfactants for the detergent composition of the present invention for effectively facilitating the component (b) on fibers are nonionic surfactants.

Examples of the anionic surfactant include sulfuric acid higher alcohol ester salts, sulfuric acid ethoxylated higher alcohol ester salts, alkylbenzene sulfonates, paraffin sulfonates, α-olefin sulfonates, α-sulfofatty acid salts and ester salts thereof, and fatty acid salts. Particularly preferred are linear alkylbenzene sulfonates having alkyl chains having 10 to 18 (preferably 12 to 14) carbon atoms and α-sulfofatty acid alkyl ester salts having 10 to 20 carbon atoms. Examples of a counterion include alkali metals, alkaline earth metals, ammoniums, and alkanolamines.

Examples of the nonionic surfactant include ethylene oxide (hereinafter, referred to as "EO") adducts of higher alcohols, EO/propylene oxide (hereinafter, referred to as "PO") adducts of higher alcohols, fatty acid alkanolamides and alkyl (poly) glucoside. Particularly preferred are EO adducts of C₁₀₋₁₆ alcohols in an average mole number of 1 to 10, from the points of removal of sebum stain, resistance to hard water, biodegradability, and compatibility with linear-alkylbenzene sulfonates.

Examples of the cationic surfactant include alkyltrimethylammonium salts. Examples of the amphoteric surfactants include carbobetaine and sulfobetaine amphoteric surfactants.

A content of the surfactant in the detergent composition of the present invention is not specifically limited, but preferably 5 to 50% by mass, and more preferably 15 to 50% by mass.

### [softening composition]

The softening composition containing the components (a) and (b) of the present invention, and a softening agent is a preferred composition for effectively adsorbing the component (b) on fibers, and can finish the fibers softly.

A content of the component (a) in the softening composition is preferably 0.01 to 15% by mass, more preferably 0.1 to 10% by mass, and even more preferably 0.2 to 2% by weight. A content of the component (b) is preferably 0.1 to 2.0% by mass, and more preferably 0.2 to 1.0% by mass. The softening composition of the present invention can contain a softening agent, an antimicrobial agent, and the like, as well as the components (a) and (b) of the present invention.

Examples of the softening agent used in the present invention include compounds represented by the formulae (V) to (IX) . 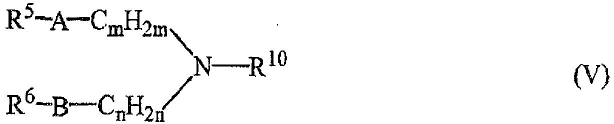 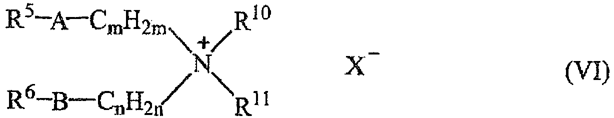 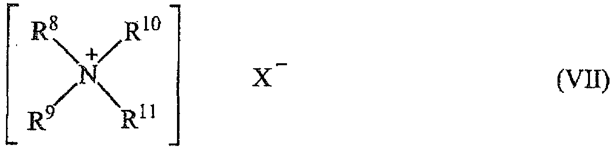 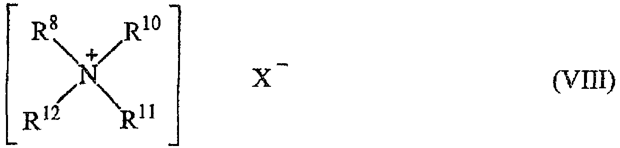 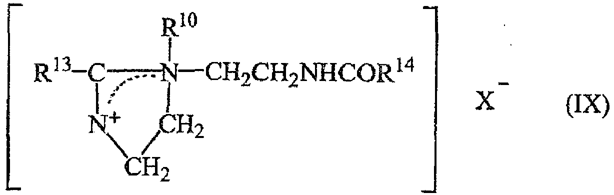 (in the formulae (V) to (IX), R⁵ and R⁶ each represent a linear or branched saturated or unsaturated hydrocarbon group having 11 to 23 carbon atoms; A and B each represent -CO-O-, -O-CO-, -NR⁷-CO-, or -CO-NR⁷; R⁷ represents a hydrogen atom or a hydrocarbon group having 1 to 3 carbon atoms; m and n each represents 2 or 3; R⁸, R⁹, R¹³, and R¹⁴ each represent an alkyl, alkenyl, or β- hydroxyalkyl group having 10 to 24 carbon atoms; R¹⁰, R¹¹, and R¹² each represent an alkyl or hydroxyalkyl group having 1 to 3 carbon atoms, a benzyl group, -(C₂H₄O)ₚ-H (wherein, P is 1 to 3); X- represents an anion group such as a halogen ion and a monoalkylsulfate ion having an alkyl group having 1 to 3 carbon atoms.)

As a compound highly effective for the component (a) to facilitate adsorption of the component (b), compounds selected from (V) and (VI) are particularly preferably used.

A content of the softening agent in the softening composition of the present invention is not specifically limited, but preferably 3 to 50% by mass, and more preferably 5 to 40% by mass.

To effectively adsorb the component (b) on fibers, a ratio of the component (a) to the softening agent in the softening composition of the present invention is preferably the component (a)/softening agent = 1/150 to 1/5, more preferably 1/100 to 1/5, even more preferably 1/80 to 1/5, even more preferably 1/50 to 1/5, and even more preferably 1/25 to 1/5 in mass ratio.

The softening composition of the present invention can combine compounds represented by the formulae (XI) to (XII) as antimicrobial agents. 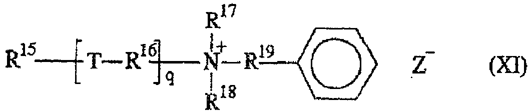 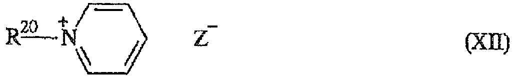 (in the formulae (XI) to (XII), R¹⁵ and R²⁰ each represent a linear or branched alkyl or alkenyl group having 5 to 19 carbon atoms; R¹⁷ and R¹⁸ each represent an alkyl or hydroxyalkyl group having 1 to 3 carbon atoms; T represents -COO-, -OCO-, -CONH-, -NHCO-, or a phenylene group; R¹⁶ represents an alkylene group having 1 to 6 carbon atoms or -(OR²¹)ᵣ- (wherein, R²¹ is an alkylene group having 2 to 3 carbon atoms; and r represents the number from 1 to 10); R¹⁹ represents an alkylene group having 1 to 3 carbon atoms; q represents 0 or 1; Z⁻ represents an anion group such as a halogen ion and a monoalkylsulfate ion having an alkyl group having 1 to 3 carbon atoms.)

A content of the as antimicrobial agent in the softening composition of the present invention is not specifically limited, but preferably 0.001 to 10% by mass, and more preferably 0.001 to 3.0% by mass.

### [Bleaching composition]

The bleaching composition of the present invention contains the components (a) and (b) of the present invention as essential ingredients. A content of the component (a) in the bleaching composition is preferably 0.1 to 20% by mass, more preferably 0.5 to 15% by mass, and even more preferably 1.0 to 10% by weight. A content of the component (b) is preferably 0.05 to 1.5% by mass, and more preferably 0.1 to 1.0% by mass.

The bleaching composition of the present invention can contain ingredients combined in conventional bleaching compositions such as bleaching ingredients, as well as the components (a) and (b) of the present invention.

Examples of the bleaching ingredient used in the present invention include compounds (hydrogen peroxide-releasing substances) that release hydrogen peroxide in aqueous solutions, hydrogen peroxide, and if required, compounds (bleaching activator) that react with hydrogen peroxide to produce organic peroxides in aqueous solutions.

Examples of the hydrogen peroxide-releasing substance include carbonate-hydrogen peroxide adducts, borate-hydrogen peroxide adducts, tripolyphosphate-hydrogen peroxide adducts, pyrophosphate-hydrogen peroxide adducts, and urea-hydrogen peroxide adducts. Among them, carbonate-hydrogen peroxide adducts and borate-hydrogen peroxide adducts are preferred, and sodium percarbonate and sodium perborate are more preferred. A content of the hydrogen peroxide-releasing substance in the bleaching composition of the present invention is not specifically limited, but preferably 0.1 to 80% by mass, and more preferably 0.5 to 70% by mass.

Examples of the bleaching activator include compounds represented by the formulae (III) and (IV). 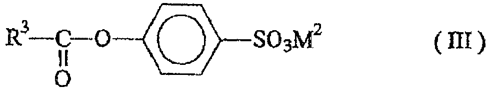 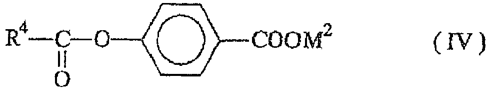 (in he formulae (III) and (IV), R³ represents an alkyl group having 4 to 13 carbon atoms, preferably 10 to 13 carbon atoms; R⁴ represents an alkyl group having 5 to 13 carbon atoms, preferably 7 to 11 carbon atoms; M² represents hydrogen, alkali metal, alkaline earth metal, ammonium, or alkanolamine.)

A content of the hydrogen peroxide-releasing substance or hydrogen peroxide in the bleaching composition of the present invention is preferably 0.1 to 20% by mass and more preferably 0.5 to 10% by mass. A content of the bleaching activator is preferably 0.1 to 10% by mass, and more preferably 0.2 to 5.0% by mass.

From the viewpoint of enhancing bleaching power, the bleaching composition of the present invention preferably further contains a compound having a calcium-capturing capacity of 200 to 600 CaCO₃ mg/g and a calcium stability constant of 3 to 10 in an amount of 0.05 to 30% by mass, more preferably 0.1 to 20% by mass.

From the viewpoint of enhancing bleaching power, the bleaching composition of the present invention preferably further contains a compound whose aqueous solution or dispersion in a concentration of 0.025% by mass has a maximum pH of 10.0 or more (20°C) and which needs 10 ml or more of aqueous 0.1 N hydrochloric acid to adjust 1 liter of the aqueous solution or dispersion to pH9 (20°C) in an amount of 1 to 30% by mass, more preferably 3 to 25% by mass, even more preferably 5 to 20% by mass, and even more preferably 5 to 15% by mass. Examples of the compound include sodium carbonate, potassium carbonate, sodium silicate, trisodium phosphate, and monoethanolamine. Among them, sodium carbonate, potassium carbonate, and sodium silicate are prefferd. Particularly sodium carbonate is prefferd.

### [Starch composition]

The starch composition of the present invention contains the components (a) and (b) of the present invention as essential ingredients. A content of the component (a) in the starch composition is preferably 0.1 to 20% by mass, more preferably 0.5 to 15% by mass, and even more preferably 1.0 to 10% by weight. A content of the component (b) is preferably 0.05 to 1.0% by mass, and more preferably 0.1 to 0.5% by mass.

The starch composition of the present invention further contains a starch base, as well as the components (a) and (b). Examples of the starch base include (i) vinyl monomers containing (a) lower fatty acid vinyl esters and (b) unsaturated carboxylic acids as essential monomers; (ii) vinyl monomers containing (a) lower fatty acid vinyl esters and (c) cationic unsaturated monomers as essential monomers.

Examples of the lower fatty acid vinyl ester (a) include vinyl acetate, vinyl butyrate, and vinyl propionate. Those may be used alone or in combination. Vinyl acetate is preferred.

Examples of the unsaturated carboxylic acid (b) include unsaturated carboxylic acids such as acrylic acid, methacrylic acid, crotonic acid, maleic acid, fumaric acid, itaconic acid, aconitic acid, sorbic acid, cinnamic acid, α-chlorosorbic acid, citraconic acid, and p-vinylbenzoic acid; alkyl esters, partial esters (preferably monoesters of lower alkyl having 1 to 6 carbon atoms) or partial amides of unsaturated polycarboxylic acids such as itaconic acid, maleic acid and fumaric acid. Among them, particularly acrylic acid, methacrylic acid, crotonic acid, monomethyl itaconate, monobutyl itaconate, monomethyl fumarate, monobutyl fumarate, and monobutyl maleate are preferred.

Examples of the cationic unsaturated monomer (c) include those represented by the formulae (XIII) to (XIX). 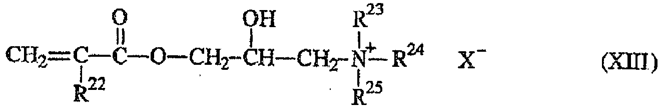 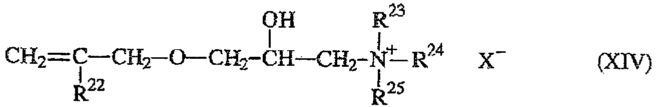 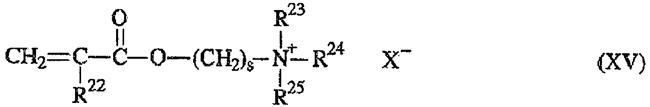 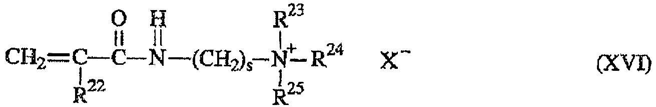 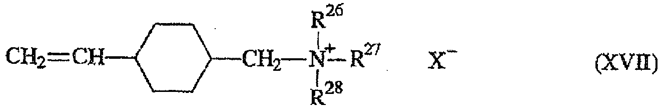 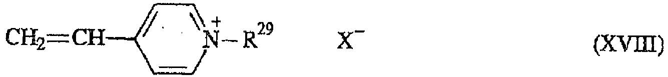 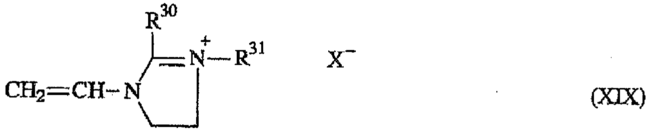 (in the formulae (XIII) to (XIX), R²² represents a hydrogen atom or an alkyl group having 1 to 3 carbon atoms (preferably a methyl group); R²³, R²⁴, and R²⁵ each represent a hydrogen atom or an alkyl group having 1 to 4; R²⁶, R²¹, and R²⁸ each represent a hydrogen atom an alkyl group having 1 to 3 carbon atoms (preferably 1 to 2 carbon atoms) ; R²⁹, R³⁰ and R³¹ each represent an alkyl group having 1 to 3 carbon atoms (preferably a methyl group); s represents the number from 1 to 10; and X⁻ represents the meaning described above.)

A content of the starch base in the starch composition of the present invention is not specifically limited, but preferably 20 to 60% by mass, and more preferably 30 to 50% by mass.

In some cases, the component (a) of the present invention is a cationic polymer compound. In this case, a much amount of anion surfactant can reduce the effect thereof, and thus an amount of the anion surfactant in the fiber treating agent is suitably small. From the viewpoint of adsorption effect of the perfume in treating in bath, a content of the component (a) in the fiber treating agent is preferably 0.1% or more by mass, more preferably 0.5% or more by mass, and even more preferably 1.0% or more by mass. From the viewpoint of storage stability of the fiber treating agent, the content is preferably 20% or less by mass, more preferably 15% or less by mass, and even more preferably 10% or less by mass.

When the fiber treating agent is applied to a softening composition, a treatment liquid is preferably prepared such that the component (2b), the perfume having ClogP of more than 4 and 7 or less, is 0.1 to 10 mg/L, particularly 0.5 to 2 mg/L in the treatment liquid, and used for treating a fiber product. When the component (2b) is used at such a concentration, a treatment liquid is preferably prepared such that the component (2a), the polymer compound, is 0.2 to 20 mg/L, particularly 1 to 4 mg/L in the treatment liquid, and used for treating a fiber product.

The component (a) of the present invention facilitates adsorption of the component (b) on a fiber product. By simultaneous addition of the component (a) with the component (b) to a fiber product, the present invention provides a treatment method that facilitating adsorption of the component (b) on a fiber product. In the method, an applying order of the components (a) and (b) to the fiber product may be sequential or simultaneous, but preferably at least a part of the component (a) is first applied to the fiber product, or both components are simultaneously applied to the fiber product.

### Examples

The following Examples further describe embodiments of the present invention.

Preparation method of polymer compounds (components (1a)) used in Examples and Comparative Examples is described below.

### (Preparation Example 1-1) (Reference)

36.0 g of N,N-dimethylaminoethyl methacrylate (molecular weight: 157.21), 14.0 g of butyl methacrylate (molecular weight: 142.2), and 180.0 g of ethanol were uniformly mixed, charged in 300 mL glass separable flask, and stirred for a given time under nitrogen atmosphere. To this was added 1.41 g of 2,2'-azobis(2,4-dimethylvaleronitrile)(V-65; Wako Pure Chemical Industries, Ltd.) dissolved in 20.0 g of ethanol, and risen to around 60°C. The mixture was kept at about 60 to 70°C for 8 hours for polymerization and aging. To this was added 100.0 g of ethanol to dilute, and cooled to room temperature. The reaction mixture was poured into 4000.0 g of ion-exchanged water dropwise for purification by precipitation. The precipitated product was dried to give a polymer 1-a1. The polymer 1-a1 had an Mw of 12800 (water/ethanol = 7/3 system, calculated based on polyethylene oxide). A composition of the polymer 1-a1 was as expected from the composition of monomers used (DMAEMA/BMA = 70/30 (molar ratio)) as analyzed by ¹H-NMR.

Polymers having molar ratios and molecular weights as listed in Table 1-1 were similarly prepared as in Preparation Example 1-1 (Reference), except that monomers used were changed.

### Examples 1-1 (Reference and Comparative Examples 1-1

### <Desizing method>

20 cotton towels (Takei towel, TW220: cotton 100%) were previously washed 5 times with a commercially available weak alkaline detergent (Attack, Kao Corporation) in a HITACHI automatic washing machine NW-6CY and dried in a room to remove excess agents (detergent concentration: 0.0667 % by mass, tap water used: 47 L, water temperature: 20°C, washing: 10 minutes, rinsing with stored water: twice). The towels were then sprayed with a solution of a polymer compound listed in Table 1-1 in ethanol using a sprayer such that an amount was 0.3%owf (0.3 g to 100 g of cloth) and dried. To measure an adsorption rate of a perfume on the polymer compound-applied towel in a rinsing bath, the following treatment was conducted.

### <Preparation of perfume emulsion>

For each perfume component, an emulsion was prepared by emulsifying 1% by mass of perfume component with 5% by mass of nonionic surfactant (nonionic surfactant of liner alcohol having 12 carbon atoms adducted with ethylene oxide in an average mole number of 20). The residual part of the emulsion was water. An emulsion prepared with Estragol (ClogP = 3.1) as a perfume component was referred to as a perfume emulsion 1-1, and an emulsion prepared with isobutyl Salicylate (ClogP = 3.9) was referred to as a perfume emulsion 1-2.

### <Measurement method of an adsorption rate>

Into a National electric bucket N-BK2-A was poured 5 L of tap water. To this was added 2 g of perfume emulsion 1-1 and stirred for 1 minute (a concentration of the perfume component in the bath was 4 ppm). Two towels (130 g) of the cotton towels spray-treated as described above were charged in the bucket and stirred for 5 minutes. An adsorption rate of the perfume component on the towel in the treatment bath was determined according to the following method.

A content of the perfume component in the treatment bath containing the perfume emulsion 1-1 in 5 L of tap water was determined by the following method (content of the perfume component before the treatment). A content of the perfume component in the treatment bath after charging towels and stirring for 5 minutes was determined by the following method (content of the perfume component after the treatment). A difference between the contents of the perfume component before the treatment (X) and after the treatment (Y), [(X)-(Y)], was considered as an adsorbed amount of the perfume component on the towel treated with the polymer compound. A rate (percentage) thereof to the content of the perfume component before the treatment (X), [(X)-(Y)]/(X)×100, was considered as an adsorption rate of the perfume component. For the perfume emulsion 1-2, similar experiments were conducted and adsorption rates were determined. Results are listed in Table 1-1.

In experiments, after samples were taken for the measurement after stirring for 5 minutes, towels were spun and line dried in a room. Perfume-remaining properties of perfumes on the line dried towels were evaluated. From the evaluations, it was confirmed that for each perfume component, towels treated with compounds represented as components (1a) had stronger perfume of the perfume component than towels treated with polymers used in Comparative Examples in Table 1-1.

### <Measurement method of a content of a perfume component in a treatment bath>

A content of a perfume component in a treatment bath before and after treatment was measured using the following liquid chromatography apparatus.
liquid chromatography apparatus: HITACHI L-6000
column: Lichrospher 100 RP-18 (e) 5 µm 125 mm × 4φ
column temperature: 40°C
eluent: mixed solvent of acetonitrile/water= 7/3 (mass ratio) flow rate: 1.0 mL/min
detection device: UV (220nm)

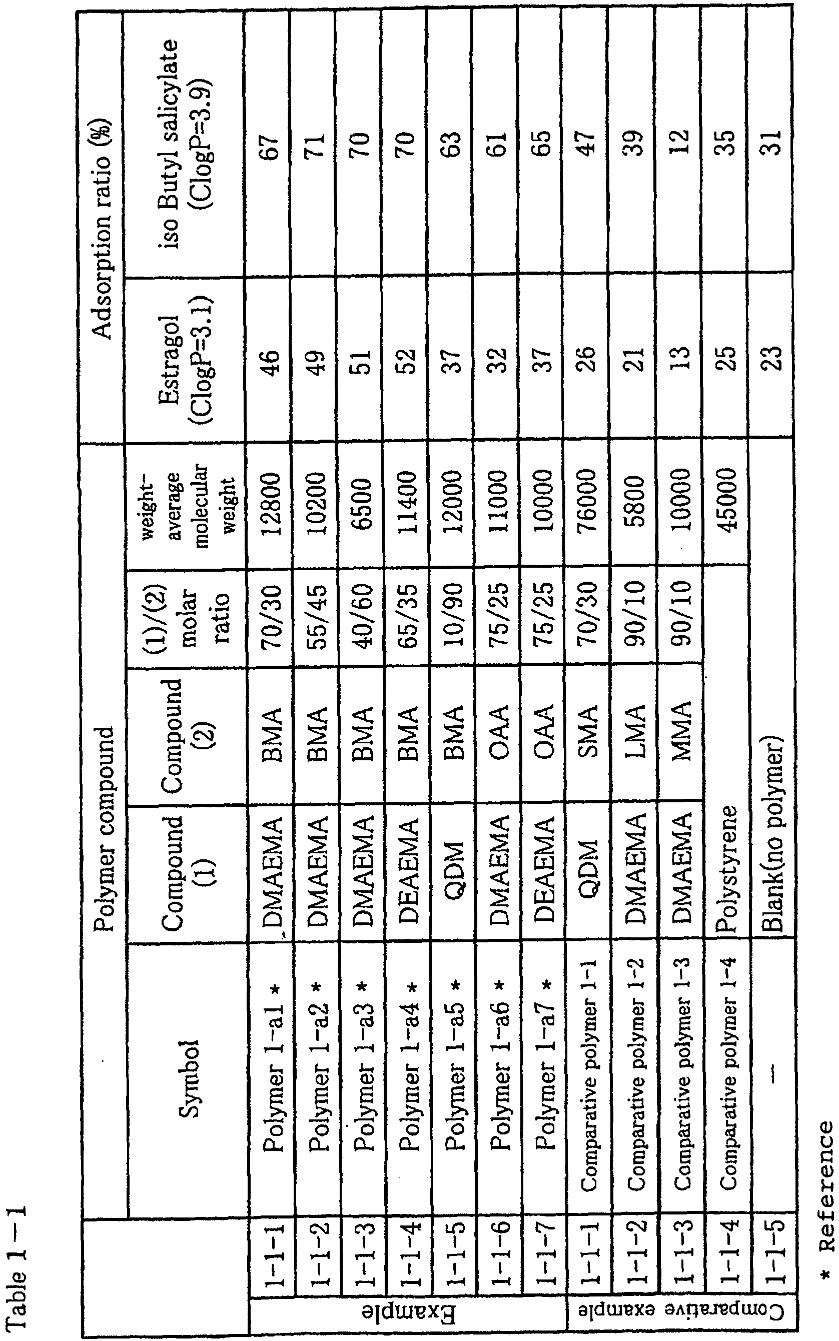

In the table, abbreviations have the following meanings.
DMAEMA: N,N-dimethylaminoethyl methacrylate
DEAEMA: N,N-diethylaminoethyl methacrylate
QDM: N,N,N-trimethyl-N-(2-methacryloyloxyethyl)ammonium chloride
BMA: butyl methacrylate
OAA: octyl acrylate
SMA: stearyl methacrylate
LMA: lauryl methacrylate
MMA: methyl methacrylate

For the polymer 1-al having high efficacy prepared by the method of preparation example 1-1 (Reference), perfume emulsions with perfume components having different ClogP values were prepared, similarly treated as above, and determined for adsorption rates. Results are listed in Table 1-2.

**Table 1-2**

| Perfume | | Adsorption rate (%) | |
|---|---|---|---|
| Kind | ClogP | Treated with polymer 1-al | Blank(no polymer) |
| Coumarin | 1.4 | 0 | 0 |
| Methyl iso Eugenol | 3.0 | 24 | 15 |
| Estragol | 3.1 | 46 | 23 |
| Cyclamen aldehyde | 3.5 | 51 | 26 |
| Lilial | 3.9 | 31 | 28 |
| iso Butyl salicylate | 3.9 | 67 | 31 |

It can be seen from Table 1-2 that a fiber product treated with a composition containing the component (1a) can effectively adsorb the component (1b) by being treated in a treatment bath containing the component (1b). The effect is similarly expressed in a fiber product treated with a composition containing the components (1a) and (1b) by treating the fiber product in a treatment bath containing the component (1b).

### Examples 1-2 (Reference) and Comparative Examples 1-2

### <Composition>

### (1) preparation of perfume emulsion containing polymer 1-a1

100 g of polymer 1-a1 and 50 g of perfume composition 1-A listed in Table 1-3 were mixed with applying high shear power, stirred for 30 minutes, and added 320 g of water dropwise with stirring. The high shear power applied in preparation of the emulsion wa.s applied using Ultra-Turrax T-20 (IKA, shaft generator S25-25F). The resultant emulsion was filtered through a 400-mesh wire mesh under atmospheric pressure to be used. The filtered product had an average particle diameter of 100 nm. Perfume emulsions were similarly prepared except that perfume compositions 1-B were used instead of perfume compositions 1-A. A perfume emulsion without polymer 1-a1 was similarly prepared except that the same amount of water was used instead of polymer 1-a1. The resultant perfume emulsions were used for preparation of liquid softening compositions described below.

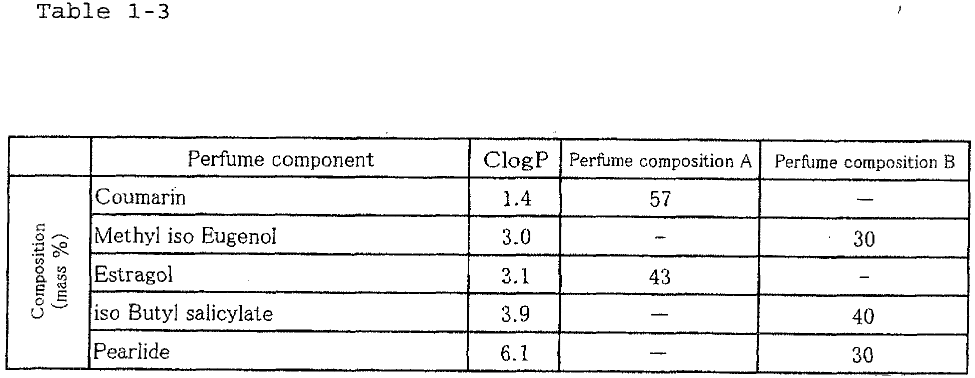

### (2) Component (c)

The following (c-1) was used. 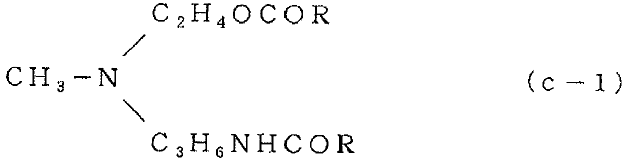 (R: residual moiety of hardened beef tallow fatty acid with a carboxy group removed)

### (c-1) is prepared by the following method.

### Preparation of (c-1)

N-(3-aminopropyl)-N-(2-hydroxyethyl)-N-methylamine and hardened beef tallow fatty acid were subjected to dehydration condensation at a molar ratio of 1/1.9 according to the known method. When a content of fatty acid in a reaction mixture was 5% by mass, the reaction was stopped. The reaction product contained (c-1) in an amount of 95% by mass, and was used for preparation of a softening composition.

### (3) Other components

**Table 1-4**

| Component | Symbol | Description |
|---|---|---|
| (e) | (e-1) | Saturated alocohol having 12 carbon atoms with added EO having the average molar number of 20 |
| (f) | (f-1) | Calcium chloride |
| (g) | (g-1) | Dehydration condensation product of 1.7 mol of hardened beef tallow fatty acid and 1 mol of glycerol (content of unsaturated fatty acid in the product was 3% by mass) |
| (h) | (h-1) | Ethanol |
| (i) | (i-1) | Food blue No.1 |
| (j) | (j-1) | Tetrasodium ethylenediaminetetraacetate |

### <Preparation of liquid softening composition>

Components described above were used in such amounts that provide 300 g of final product at a combination listed in Table 1-5 to prepare a softening composition. To 500 mL glass beaker, in which an agitating blade having three turbine vanes each having 2.5 cm length was set 1 cm above the bottom of the beaker, was placed a necessary amount of 95% by mass of ion-exchanged water, and raised a temperature to 62°C with a water bath. With stirring at 500 rpm, to this was added the component (e), which was molten, and then a mixture of component (c), (g), and (h), which were previously mixed and molten at 70°C. To a mixture was added an aqueous 35% hydrochloric acid solution and/or an aqueous 48% sodium hydroxide solution in an amount required for adjusting pH to a given value. Then, to this was added components (i) and (j), stirred for 5 minutes, cooled to 30°C with a water bath at 5°C, and added the component (f) and further stirred for 5 minutes. To this was further added a perfume emulsion with stirring, and again checked for pH, and if required, added with an aqueous 35% hydrochloric acid solution and/or an aqueous 48% sodium hydroxide solution to adjust pH. In compositions listed in Table 1-5, the component (c-1) existed as an almost hydrochloric acid salt. In table 1-5, numeric values of the component (c-1) represent an amount of the component itself (effective component).

### <Treatment with liquid softening composition and measurement of adsorption rate of perfume component>

20 cotton towels (Takei towel, TW220: cotton 100%) were previously washed 5 times with a commercially available weak alkaline detergent (Attack, Kao Corporation) in a HITACHI automatic washing machine NW-6CY and dried in a room to remove excess agents (detergent concentration: 0.0667% by mass, tap water used: 47L, water temperature: 20°C, washing: 10 minutes, rinsing with stored water: twice). In a National electric bucket N-BK2-A, a softening composition was dissolved in 5L of tap water in such amount as the composition/cloth = 10g/1.0kg (preparation of a treatment bath). Two cotton towels were immersed therein for 5 times and treated.

An adsorption rate of the perfume component was similarly determined as in Examples 1-1 by determining a content of the perfume component in the treatment bath before treatment and a content of the perfume component in the treatment bath after immersion of the cotton towels for 5 minutes (a content of the perfume component after treatment). Results are shown in Table 1-5. It was confirmed that towels treated with liquid softening compositions of Examples 1-2-1, 1-2-2, 1-2-3, and 1-2-4 had higher perfume-remaining properties for perfume components having ClogP from 2 to 4 (components (1b)) than that of towels treated with liquid softening compositions of Comparative Examples 1-2-1, 1-2-2, and 1-2-3. Towels treated with liquid softening compositions of Examples 1-2-1, 1-2-2, 1-2-3, and 1-2-4 had soft finish.

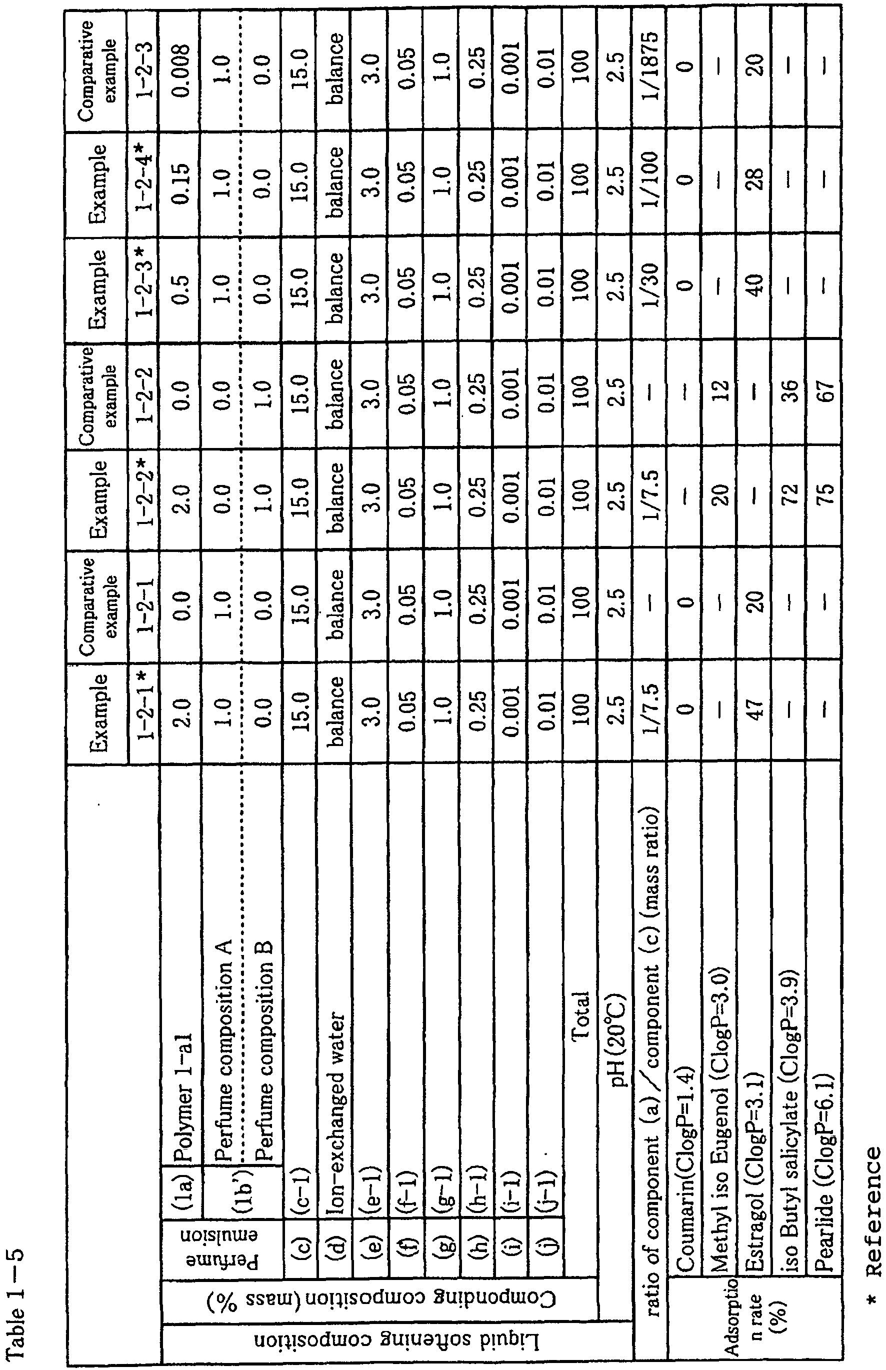

### Examples 1-3 (Reference)

Liquid detergent compositions were prepared using components described below and perfume components listed in Table 1-3 used in the perfume composition 1-B, and evaluated for perfume-remaining properties by the method described below. Results are shown in Table 1-6.

### <Washing treatment>

To a washing tub of an automatic washing machine (TOSHIBA AW-D802VP) was charged 30 L of tap water and 40 ml of laundry liquid detergent composition listed in Table 1-5 (preparation of treatment bath containing a perfume component). A commercially available cotton towel (Takei towel, TW220: cotton 100%) was charged in the tub, and subjected to washing of a standard course (liquid after washing). In washing, the commercially available cotton towel was a pre-treated towel obtained by washing 20 cotton towels (Takei towel, TW220: cotton 100%) 5 times with a commercially available weak alkaline detergent (Attack, Kao Corporation) in a HITACHI automatic washing machine NW-6CY and drying in a room to remove excess agents (detergent concentration: 0.0667% by mass, tap water used: 47L, water temperature: 20°C, washing: 10 minutes, rinsing with stored water: twice).

After draining and spinning were conducted, to the tub was charged 30L of water, and rinsing with stored water was conducted for 4 minutes (rinsing liquid 1). After draining the rinsing liquid 1 and spinning were conducted, to the tub was charged additional 30L of water, and second rinsing with stored water was conducted for 4 minutes (rinsing liquid 2). In this time, tap water used was adjusted to 20°C. An adsorption rate of perfume component was determined by the following method.

A content (I) of the perfume component in the treatment bath before washing was measured. Contents of the perfume component in the rinsing liquid 1 and the rinsing liquid 2 after washing were also measured to determine a total content (II). A difference between (I) and (II) was considered as an adsorbed amount on the treated towel. A rate (percentage) thereof to the content (I) of the perfume component in the treatment bath before washing, [(I)-(II)]/(I)×100, was considered as an adsorption rate of the perfume component. Contents of the perfume component were similarly measured as in Examples 1.

Results are shown in Table 1-6. It was confirmed that a towel treated with the liquid detergent composition of Example 1-3-1 (Reference) had a higher perfume-remaining property of perfumes having ClogP from 2 to 4 than that of a towel treated with the liquid detergent composition of Comparative Example 1-3-1.

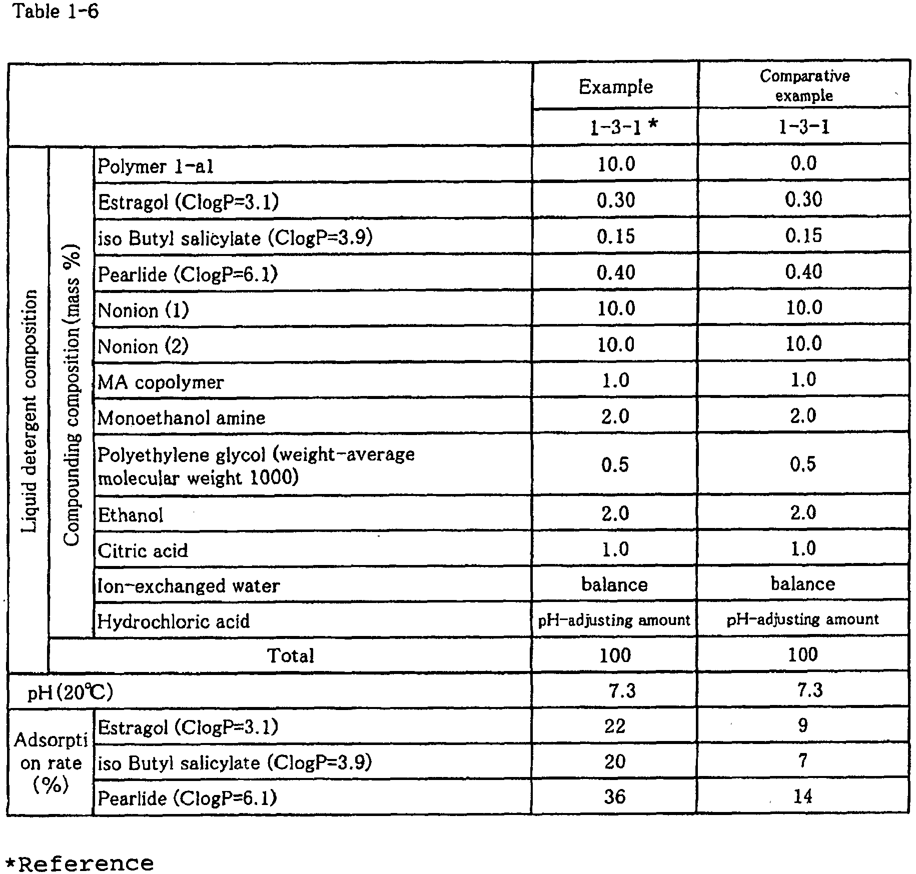

In Table 1-6, ingredients are as follows.
Nonion (1): polyoxyethylene alkyl ether obtained by adding EO to a linear primary alcohol having 10 to 14 carbon atoms in an average mole number of 12
Nonion (2) : polyoxyethylene alkyl ether obtained by adding EO to a secondary alcohol having 10 to 14 carbon atoms in an average mole number of 7
MA copolymer: pentene/maleic acid copolymer (molar ratio: 50/50, average molecular weight: 10000)

In the table, pH value is of an aqueous 0.1% by mass solution at 20°C, and an amount of hydrochloric acid added is a required amount for adjusting pH to a desired value.

A preparation method of polymer compounds (component (2a)) used in Examples and Comparative Examples will be described below.

### (Preparation Example 2-1)

42.37 g of N,N-dimethylaminoethyl methacrylate (molecular weight: 157.21), 7.62 g of lauryl methacrylate (molecular weight: 254.21), and 180.0 g of ethanol were uniformly mixed. In a 300 mL glass separable flask, the mixture was stirred for a given time under nitrogen atmosphere. To this was added a solution of 1.41 g of 2,2'-azobis(2,4-dimethylvaleronitrile) (V-65; Wako Pure Chemical Industries, Ltd.) in 20.0 g of ethanol, and raised to around 60°C. The mixture was held around 60 to 70°C for total 8 hours to polymerize/mature. To this was added 100.0 g of ethanol, and cooled to room temperature. The reaction mixture was poured into 4000.0 g of ion-exchanged water dropwise for purification by precipitation. The precipitated product was dried to give a polymer 2-a1. The polymer 2-a1 had an Mw of 11000 (water/ethanol = 7/3 system, calculated based on polyethylene oxide). A composition of the polymer 2-al was as expected from the composition of monomers used (DMAEMA/LMA = 90/10 (molar ratio)) as analyzed by ¹H-NMR.

Polymers having molar ratios and molecular weights as listed in Table 2-1 were similarly prepared as in Preparation Example 2-1, except that monomers used were changed.

### Examples 2-1 and Comparative Examples 2-1

Pre-treatment method was similarly conducted as in Examples 1-1, except that polymer compounds in Table 2-1 were used.

### <Preparation of perfume emulsion>

For each perfume component, an emulsion was prepared by emulsifying 1% by mass of perfume component with 5% by mass of nonionic surfactant (nonionic surfactant of liner alcohol having 12 carbon atoms adducted with ethylene oxide in an average mole number of 20). The residual part of the emulsion was water. An emulsion prepared with Pearlide (ClogP = 5.7) as a perfume component was referred to as a perfume emulsion 2-1.

A measurement method of adsorption rate was similarly conducted as in Examples 1-1, except that perfume emulsions 2-1 were used.

Results are shown in Table 2-1.

In experiments, after samples were taken for the measurement after stirring for 5 minutes, towels were spun and naturally dried in a room. Perfume-remaining properties of perfumes on the natural-dried towels were evaluated. From the evaluations, it was confirmed that for each perfume component, towels treated with compounds represented as components (2a) had stronger scent of the perfume component than towels treated with polymers used in Comparative Examples in Table 2-1.

A measurement method of content of a perfume component in a treatment bath was similarly conducted as in Examples 1-1.

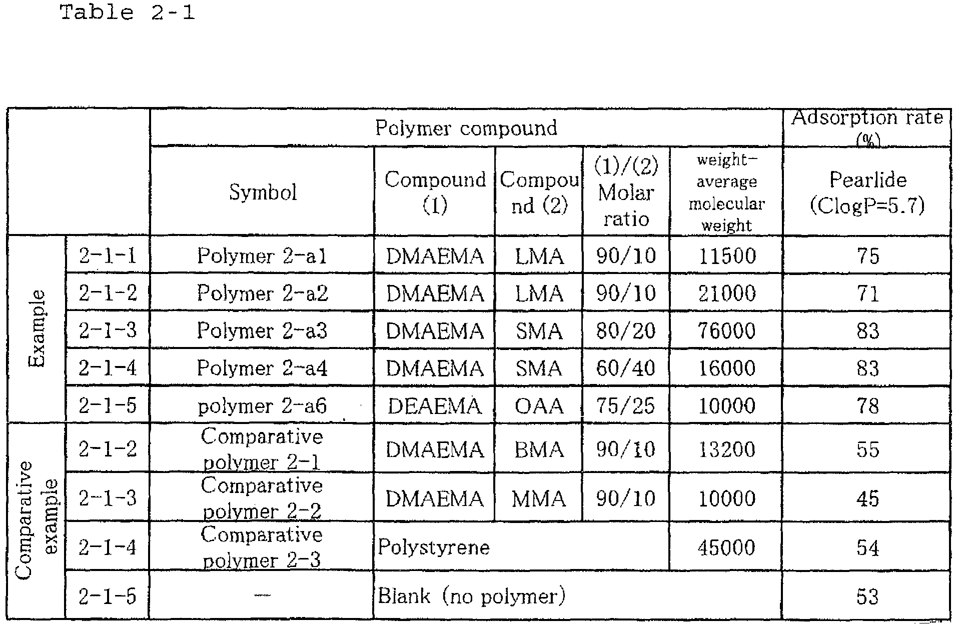

Symbols in the table have same meanings in Table 1-1.

For the polymer 2-a1 having high efficacy prepared by the method of preparation example 2-1, perfume emulsions with perfume components having different ClogP values were prepared, similarly treated as above, and determined for adsorption rates. Results are listed in Table 2-2.

**Table 2-2**

| Perfume | | Adsorption rate (%) | |
|---|---|---|---|
| Kind | ClogP | Treated with polymer 2-a1 | Blank (not treated with polymer 2-a1) |
| pearlide | 5.7 | 75 | 53 |
| tentarome | 5.7 | 83 | 54 |
| hexyl cinnamic aldehyde | 5.0 | 66 | 64 |
| amyl cinnamic aldehyde | 4.5 | 59 | 53 |
| benzyl salicylate | 4.0 | 86 | 50 |
| Coumarin | 1.4 | 0 | 0 |
| iso Butyl salicylate | 3.9 | 50 | 31 |

It can be seen from Table 2-2 that a fiber product treated with a composition containing the component (2a) can effectively adsorb the component (2b) by being treated in a treatment bath containing the component (2b). The effect is similarly expressed in a fiber product treated with a composition containing the components (2a) and (2b) by treating the fiber product in a treatment bath containing the component (2b).

### Examples 2-2 and Comparative Examples 2-2

### <Composition>

(1) preparation of perfume emulsion containing polymer 2-a1
   100 g of polymer 2-a1 and 50 g of perfume composition 2-A listed in Table 2-3 were mixed with applying high shear power, stirred for 30 minutes, and added 320 g of water dropwise with stirring. The high shear power applied in preparation of the emulsion was applied using Ultra-Turrax T-20 (IKA, shaft generator S25-25F). The resultant emulsion was filtered through a 400-mesh wire mesh under atmospheric pressure to be used. The filtered product had an average particle diameter of 100 nm. Perfume emulsions were similarly prepared except that perfume compositions 2-B were used instead of perfume compositions 2-A. A perfume emulsion without polymer 2-a1 was similarly prepared except that the same amount of water was used instead of polymer 2-a1. The resultant perfume emulsions were used for preparation of liquid softening compositions described below. 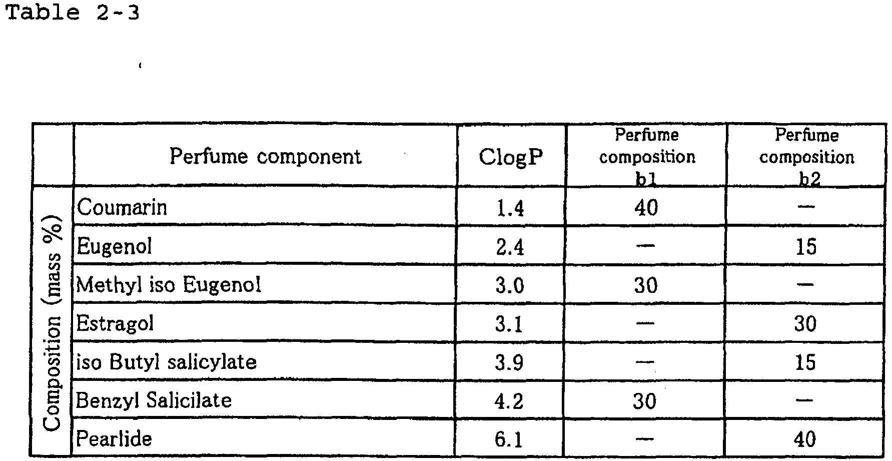
(2) As the component (c), the same (c-1) as in Examples 1-2 (Reference) was used.
(3) Other components used were the same as in Examples 1-2 (Reference).

Preparation of liquid softening compositions, treatment with liquid softening compositions, and measurement of adsorption rates of perfume components were similarly conducted as in Examples 1-2 (Reference), with the proviso that components were used as compositions listed in Table 2-4. In the compositions in Table 2-4, the component (c-1) existed as an almost hydrochloric acid salt. In table 2-4, numeric values of the component (c-1) represent an amount of the component itself (effective component).

An adsorption rate of the perfume component was similarly determined as in Examples 2-1 by determining a content of the perfume component in the treatment bath before treatment and a content of the perfume component in the treatment bath after immersion of the cotton towels for 5 minutes (a content of the perfume component after treatment). Results are shown in Table 5. It was confirmed that towels treated with liquid softening compositions of Examples 2-2-1, 2-2-2, 2-2-3, and 2-2-4 had higher perfume-remaining properties for perfume components having ClogP of more than 4 and 7 or less (components (2b)) after one day drying in a room than that of towels treated with liquid softening compositions of Comparative Examples 2-2-1, 2-2-2, and 2-2-3. Moreover, it was also confirmed that Examples 2-2-1 and 2-2-2 exhibited higher perfume-remaining properties after five days drying in a room, compared with Comparative Examples. Towels treated with liquid softening compositions of Examples 2-2-1, 2-2-2, 2-2-3, and 2-2-4 had soft finish.

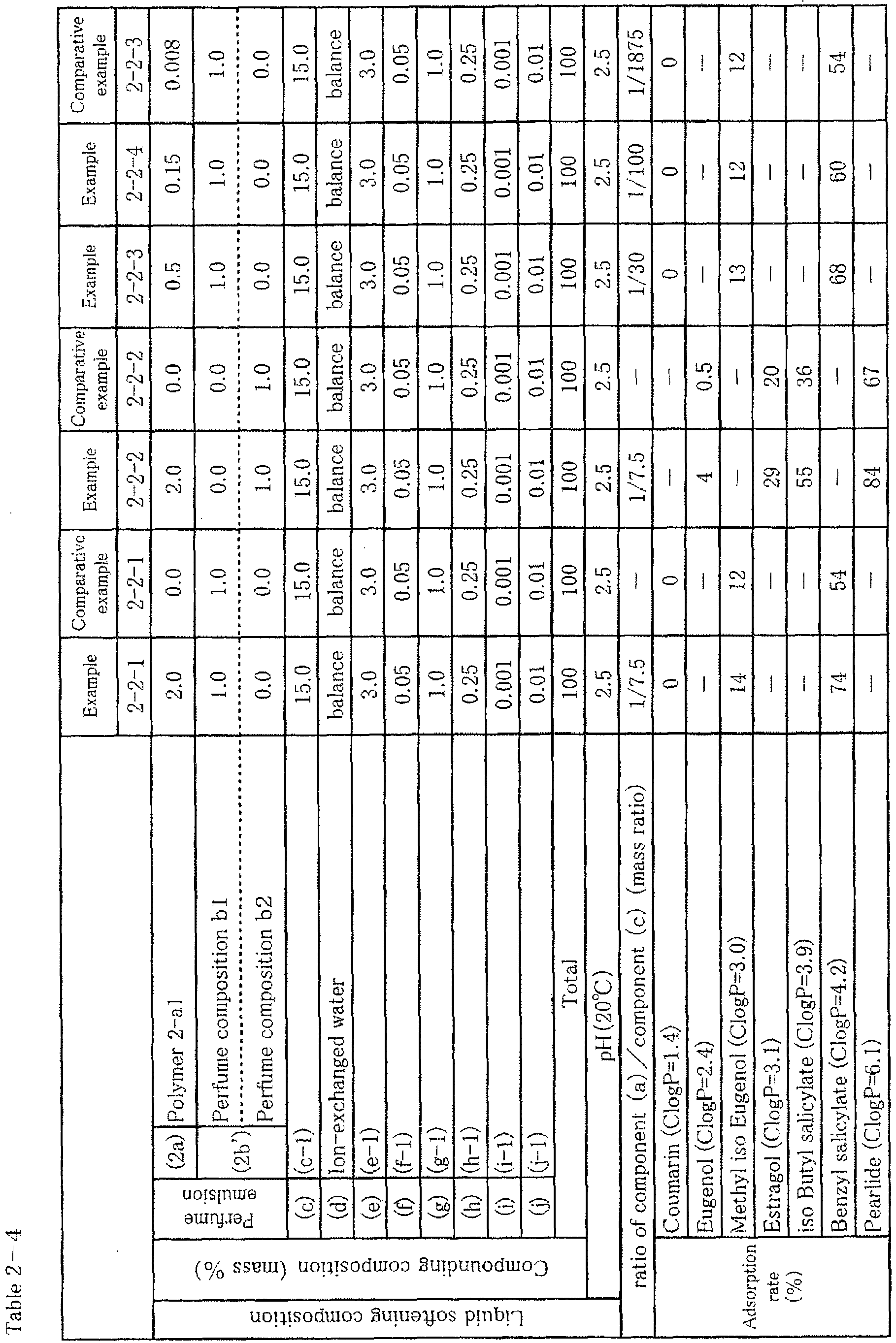

## Claims

1. A fiber treating agent comprising (2a) a polymer compound comprising (A) a monomer unit derived from a compound represented by the formula (1), or an acid salt or a quaternary salt thereof and (2-B) a monomer unit derived from a compound represented by the formula (2-2) in a molar ratio of (A) / (2-B) = 10/90 to 99/1; and (2b) a perfume component having ClogP of more than 4 and 7 or less: 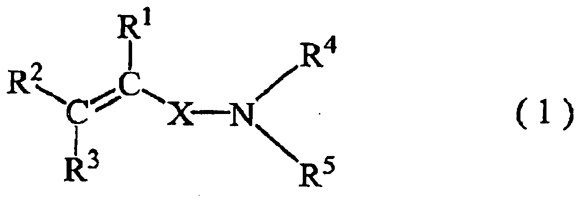 (in the formula (1), R¹ and R² each independently represent a hydrogen atom or a methyl group; R³ represents -COOM (M is a hydrogen atom or an alkali metal atom) or a hydrogen atom; X represents -COO-R⁶-, -CONR⁷-R⁸-, or -CH₂-; R⁴ represents, when X is -CH₂-, a group represented by the formula (3) : 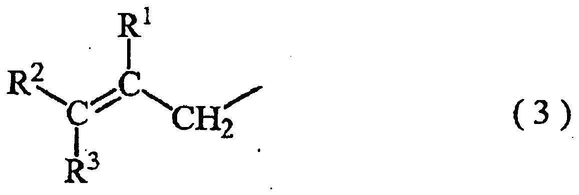 or, when X is one of the other groups, an alkyl group having 1 to 3 carbon atoms or a hydroxyalkyl group having 1 to 3 carbon atoms; R⁵ represents an alkyl group having 1 to 3 carbon atoms, a hydroxyalkyl group having 1 to 3 carbon atoms, or a hydrogen atom; R⁶ and R⁸ each independently represent an alkylene group having 2 to 3 carbon atoms; and R⁷ represents a hydrogen atom or an alkyl group having 1 to 3 carbon atoms); 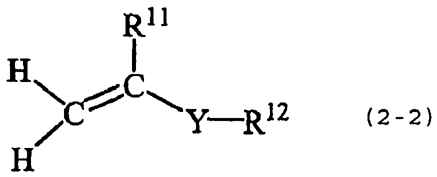 (wherein, R¹¹ represents a hydrogen atom or an alkyl group having 1 to 3 carbon atoms; Y represents -O-CO-, -COO-, or -CONR¹³- (R¹³ represents a hydrogen atom or an alkyl group having 1 to 3 carbon atoms) ; and R¹² represents a linear or branched alkyl group having 12 to 22 carbon atoms.)

2. The fiber treating agent according to claim 1, wherein the perfume component (2b) having ClogP of more than 4 and 7 or less is contained in the perfume composition (2b') in an amount of 20 to 60% by mass.

3. A method of facilitating adsorption of the perfume on a fiber product, comprising treating the fiber product with the fiber treating agent according to claim 1 or 2.

4. The method according to claim 3, comprising treating the fiber product with a fiber treating agent composition comprising the fiber treating agent according to claim 1 or 2 and water.

5. A method for treating a fiber product, comprising adding a perfume component (2b) having ClogP of more than 4 and 7 or less to the fiber product, to facilitate adsorption of the perfume component (2b) having ClogP of more than 4 and 7 or less on the fiber product, simultaneously with, or after a pre-treatment with, a polymer compound (2a) comprising (A) a monomer unit derived from a compound represented by the formula (1), or an acid salt or a quaternary salt thereof and (2-B) a monomer unit derived from a compound represented by the formula (2-2) in a molar ratio of (A)/(2-B) = 10/90 to 99/1: 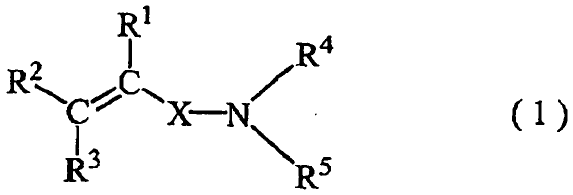 (in the formula (1), R¹ and R² each independently represent a hydrogen atom or a methyl group; R³ represents -COOM (M is a hydrogen atom or an alkali metal atom) or a hydrogen atom; X represents -COO-R⁶-, -CONR⁷-R⁸-, or -CH₂-; R⁴ represents, when X is -CH₂-, a group represented by the formula (3) : 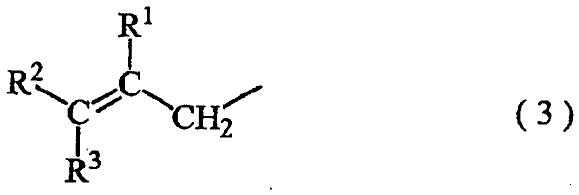 or, when X is one of the other groups, an alkyl group having 1 to 3 carbon atoms or a hydroxyalkyl group having 1 to 3 carbon atoms; R⁵ represents an alkyl group having 1 to 3 carbon atoms, a hydroxyalkyl group having 1 to 3 carbon atoms, or a hydrogen atom; R⁶ and R⁸ each independently represent an alkylene group having 2 to 3 carbon atoms; and R⁷ represents a hydrogen atom or an alkyl group having 1 to 3 carbon atoms); 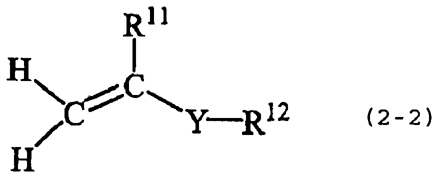 (wherein, R¹¹ represents a hydrogen atom or an alkyl group having 1 to 3 carbon atoms; Y represents -O-CO-, -COO-, or -CONR¹³- (R¹³ represents a hydrogen atom or an alkyl group having 1 to 3 carbon atoms); and R¹² represents a linear or branched alkyl group having 12 to 22 carbon atoms.)

6. A softening composition comprising (2a) 0.01 to 15% by mass of a polymer compound comprising (A) a monomer unit derived from a compound represented by the formula (1), or an acid salt or a quaternary salt thereof and (2-B) a monomer unit derived from a compound represented by the formula (2-2) in a molar ratio of (A)/(2-B) = 10/90 to 99/1, (2b) 0.1 to 2.0% by mass of a perfume component having ClogP of more than 4 and 7 or less, and 3 to 50% by mass of a softening agent, wherein a content ratio of the polymer compound (2a) and the softening agent is (2a)/softening agent = 1/150 to 1/5 in mass ratio: 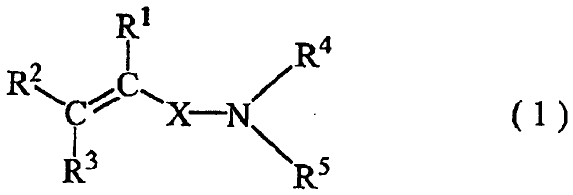 (in the formula (1), R¹ and R² each independently represent a hydrogen atom or a methyl group; R³ represents -COOM (M is a hydrogen atom or an alkali metal atom) or a hydrogen atom; X represents -COO-R⁶-, -CONR⁷R⁸-, or -CH₂-; R⁴ represents, when X is -CH₂-, a group represented by the formula (3) : 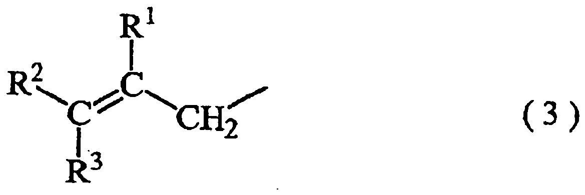 or when X is one of the other groups, an alkyl group having 1 to 3 carbon atoms or a hydroxyalkyl group having 1 to 3 carbon atoms; R⁵ represents an alkyl group having 1 to 3 carbon atoms, a hydroxyalkyl group having 1 to 3 carbon atoms, or a hydrogen atom; R⁶ and R⁸ each independently represent an alkylene group having 2 to 3 carbon atoms; and R⁷ represents a hydrogen atom or an alkyl group having 1 to 3 carbon atoms); 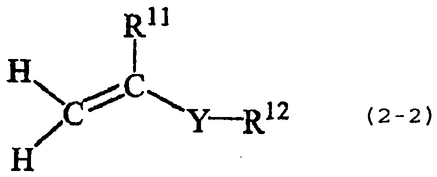 (wherein, R¹¹ represents a hydrogen atom or an alkyl group having 1 to 3 carbon atoms; Y represents -O-CO-, -COO-, or -CONR¹³- (R¹³ represents a hydrogen atom or an alkyl group having 1 to 3 carbon atoms); and R¹² represents a linear or branched alkyl group having 12 to 22 carbon atoms.)

## Patentansprüche

1. Faserbehandlungsmittel, umfassend (2a) eine Polymerverbindung, umfassend (A) eine Monomereinheit, die von einer Verbindung mit der Formel (1) stammt, oder ein Säuresalz oder quaternäres Salz davon und (2-B) eine Monomereinheit, die von einer Verbindung mit der Formel (2-2) stammt, in einem molaren Verhältnis von (A)/(2-B) = 10/90 bis 99/1 und (2b) eine Parfümkomponente mit einem ClogP von mehr als 4 und 7 oder weniger, 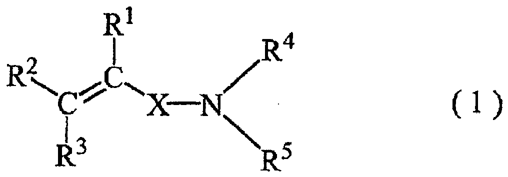 (worin in der Formel (1) R¹ und R² jeweils unabhängig ein Wasserstoffatom oder eine Methylgruppe sind, R³ -COOM (M ist Wasserstoffatom oder ein Alkalimetallatom) oder Wasserstoffatom ist, X -COO-R⁶-, -CONR⁷-R⁸- oder -CH₂- ist, R⁴ eine Gruppe mit der Formel (3) ist, wenn X -CH₂- ist, 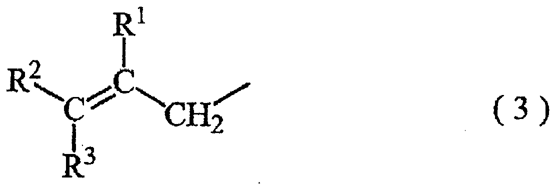 oder wenn X eine der anderen Gruppen ist, eine Alkylgruppe mit 1 bis 3 Kohlenstoffatomen oder Hydroxyalkylgruppe mit 1 bis 3 Kohlenstoffatomen ist, R⁵ eine Alkylgruppe mit 1 bis 3 Kohlenstoffatomen, Hydroxyalkylgruppe mit 1 bis 3 Kohlenstoffatomen oder ein Wasserstoffatom ist; R⁶ und R⁸ jeweils unabhängig eine Alkylengruppe mit 2 bis 3 Kohlenstoffatomen sind; und R⁷ ein Wasserstoffatom oder eine Alkylgruppe mit 1 bis 3 Kohlenstoffatomen ist); 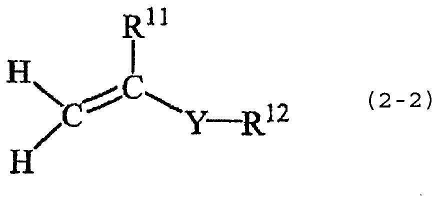 (worin R¹¹ ein Wasserstoffatom oder eine Alkylgruppe mit 1 bis 3 Kohlenstoffatomen ist; Y -O-CO-, -COO- oder -CONR¹³- ist (R¹³ ist ein Wasserstoffatom oder eine Alkylgruppe mit 1 bis 3 Kohlenstoffatomen); und R¹² eine lineare oder verzweigte Alkylgruppe mit 12 bis 22 Kohlenstoffatomen ist).

2. Faserbehandlungsmittel nach Anspruch 1, worin die Parfümkomponente (2b) mit einem ClogP von mehr als 4 und 7 oder weniger in der Parfümzusammensetzung (2b') in einer Menge von 20 bis 60 Massen-% enthalten ist.

3. Verfahren zum Erleichtern der Adsorption des Parfüms an ein Faserprodukt, umfassend die Behandlung des Faserproduktes mit dem Faserbehandlungsmittel nach Anspruch 1 oder 2.

4. Verfahren nach Anspruch 3, umfassend die Behandlung des Faserproduktes mit einer Faserbehandlungszusammensetzung, umfassend das Faserbehandlungsmittel nach Anspruch 1 oder 2 und Wasser.

5. Verfahren zum Behandeln eines Faserproduktes, umfassend die Zugabe einer Parfümkomponente (2b) mit einem ClogP von mehr als 4 und 7 oder weniger zum Faserprodukt, zur Erleichterung der Adsorption der Parfümkomponente (2b) mit einem ClogP von mehr als 4 und 7 oder weniger an dem Faserprodukt, gleichzeitig mit oder nach einer Vorbehandlung mit einer Polymerverbindung (2a), umfassend (A) eine Monomereinheit, die von einer Verbindung mit der Formel (1) stammt, oder ein Säuresalz oder quaternäres Salz davon und (2-B) eine Monomereinheit, die von einer Verbindung mit der Formel (2-2) stammt, in einem molaren Verhältnis von (A)/(2-B) = 10/90 bis 99/1: 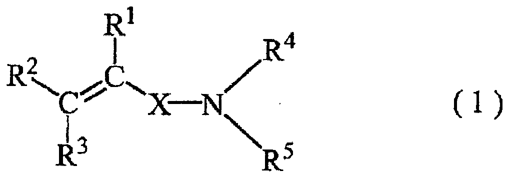 (worin in der Formel (1) R¹ und R² jeweils unabhängig ein Wasserstoffatom oder eine Methylgruppe sind, R³ -COOM (M ist Wasserstoffatom oder ein Alkalimetallatom) oder Wasserstoffatom ist, X -COO-R⁶-, -CONR⁷-R⁸- oder -CH₂- ist, R⁴ eine Gruppe mit der Formel (3) ist, wenn X -CH₂- ist, 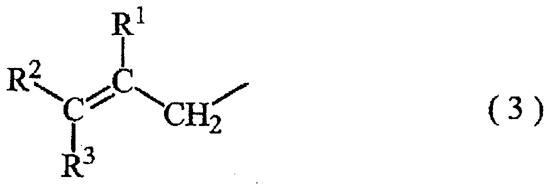 oder, wenn X eine der anderen Gruppen ist, eine Alkylgruppe mit 1 bis 3 Kohlenstoffatomen oder Hydroxyalkylgruppe mit 1 bis 3 Kohlenstoffatomen ist, R⁵ eine Alkylgruppe mit 1 bis 3 Kohlenstoffatomen, Hydroxyalkylgruppe mit 1 bis 3 Kohlenstoffatomen oder ein Wasserstoffatom ist; R⁶ und R⁸ jeweils unabhängig eine Alkylengruppe mit 2 bis 3 Kohlenstoffatomen sind; und R⁷ ein Wasserstoffatom oder eine Alkylgruppe mit 1 bis 3 Kohlenstoffatomen ist); 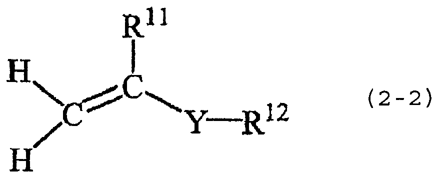 (worin R¹¹ ein Wasserstoffatom oder eine Alkylgruppe mit 1 bis 3 Kohlenstoffatomen ist; Y -O-CO-, -COO- oder -CONR¹³- ist (R¹³ ist ein Wasserstoffatom oder eine Alkylgruppe mit 1 bis 3 Kohlenstoffatomen); und R¹² eine lineare oder verzweigte Alkylgruppe mit 12 bis 22 Kohlenstoffatomen ist).

6. Weichmacherzusammensetzung, umfassend (2a) 0,01 bis 15 Massen-% einer Polymerverbindung, umfassend (A) eine Monomereinheit, die von einer Verbindung mit der Formel (1) stammt, oder ein Säuresalz oder quaternäres Salz davon und (2-B) eine Monomereinheit, die von einer Verbindung mit der Formel (2-2) stammt, in einem molaren Verhältnis von (A)/(2-B) = 10/90 bis 99/1, (2b) 0,1 bis 2,0 Massen-% einer Parfümkomponente mit einem ClogP von mehr als 4 und 7 oder weniger und 3 bis 50 Massen-% eines Weichmachermittels, worin ein Verhältnis der Polymerverbindung (2a) und des Weichmachers (2a)/Weichmacher = 1/150 bis 1/5 als Massenverhältnis ist: 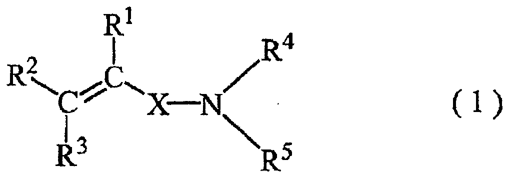 (worin in der Formel (1) R¹ und R² jeweils unabhängig ein Wasserstoffatom oder eine Methylgruppe sind, R³ -COOM (M ist Wasserstoffatom oder ein Alkalimetallatom) oder Wasserstoffatom ist, X -COO-R⁶-, -CONR⁷R⁸- oder -CH₂- ist, R⁴ eine Gruppe mit der Formel (3) ist, wenn X -CH₂- ist, 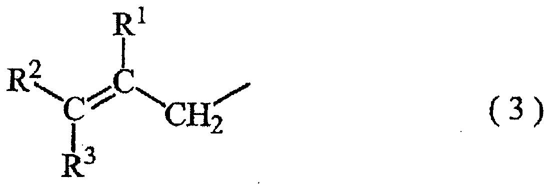 oder, wenn X eine der anderen Gruppen ist, eine Alkylgruppe mit 1 bis 3 Kohlenstoffatomen oder Hydroxyalkylgruppe mit 1 bis 3 Kohlenstoffatomen ist, R⁵ eine Alkylgruppe mit 1 bis 3 Kohlenstoffatomen, Hydroxyalkylgruppe mit 1 bis 3 Kohlenstoffatomen oder ein Wasserstoffatom ist; R⁶ und R⁸ jeweils unabhängig eine Alkylengruppe mit 2 bis 3 Kohlenstoffatomen sind; und R⁷ ein Wasserstoffatom oder eine Alkylgruppe mit 1 bis 3 Kohlenstoffatomen ist); 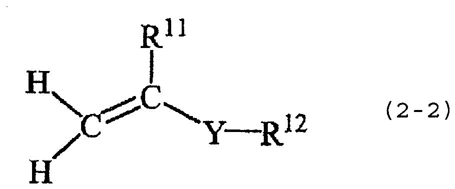 (worin R¹¹ ein Wasserstoffatom oder eine Alkylgruppe mit 1 bis 3 Kohlenstoffatomen ist; Y -O-CO-, -COO- oder -CONR¹³- ist (R¹³ ist ein Wasserstoffatom oder eine Alkylgruppe mit 1 bis 3 Kohlenstoffatomen); und R¹² eine lineare oder verzweigte Alkylgruppe mit 12 bis 22 Kohlenstoffatomen ist).

## Revendications

1. Agent de traitement des fibres comprenant (2a) un composé polymère comprenant (A) un motif monomère dérivé d'un composé représenté par la formule (1), ou un sel d'acide ou un sel quaternaire de celui-ci et (2-B) un motif monomère dérivé d'un composé représenté par la formule (2-2) dans un rapport molaire de (A)/(2-B) = 10/90 à 99/1 ; et (2b) un composant de parfum ayant un ClogP de plus de 4 et 7 ou moins : 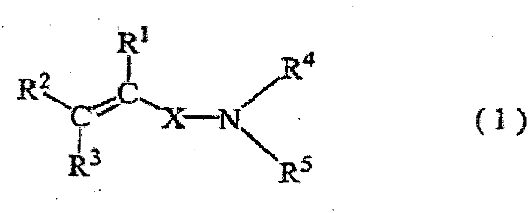 (dans la formule (1), R¹ et R² représentent chacun indépendamment un atome d'hydrogène ou un groupe méthyle ; R³ représente -COOM (M est un atome d'hydrogène ou un atome de métal alcalin) ou un atome d'hydrogène ; X représente -COO-R⁶-, -CONR⁷-R⁸-, ou -CH₂- ; R⁴ représente, lorsque X est -CH₂-, un groupe représenté par la formule (3) : 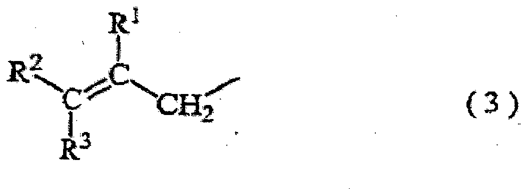 ou, lorsque X est l'un des autres groupes, un groupe alkyle ayant 1 à 3 atomes de carbone ou un groupe hydroxyalkyle ayant 1 à 3 atomes de carbone ; R⁵ représente un groupe alkyle ayant 1 à 3 atomes de carbone, un groupe hydroxyalkyle ayant 1 à 3 atomes de carbone, ou un atome d'hydrogène ; R⁶ et R⁸ représentent chacun indépendamment un groupe alkylène ayant 2 à 3 atomes de carbone ; et R⁷ représente un atome d'hydrogène ou un groupe alkyle ayant 1 à 3 atomes de carbone) ; 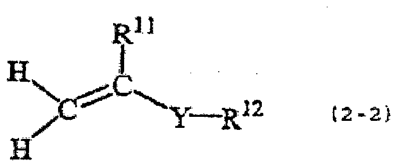 (dans laquelle R¹¹ représente un atome d'hydrogène ou un groupe alkyle ayant 1 à 3 atomes de carbone ; Y représente -O-CO-, -COO-, ou -CONR¹³- (R¹³ représente un atome d'hydrogène ou un groupe alkyle ayant 1 à 3 atomes de carbone) ; et R¹² représente un groupe alkyle linéaire ou ramifié ayant 12 à 22 atomes de carbone).

2. Agent de traitement des fibres selon la revendication 1, dans lequel le composant de parfum (2b) ayant un ClogP de plus de 4 et 7 ou moins est contenu dans la composition de parfum (2b') dans une quantité de 20 à 60 % en masse.

3. Procédé pour faciliter l'adsorption du parfum sur un produit fibreux, comprenant le traitement du produit fibreux avec l'agent de traitement des fibres selon la revendication 1 ou 2.

4. Procédé selon la revendication 3, comprenant le traitement du produit fibreux avec une composition d'agent de traitement des fibres comprenant l'agent de traitement des fibres selon la revendication 1 ou 2, et de l'eau.

5. Procédé de traitement d'un produit fibreux, comprenant l'ajout d'un composant de parfum (2b) ayant un ClogP de plus de 4 et 7 ou moins au produit fibreux, pour faciliter l'adsorption du composant de parfum (2b) ayant un ClogP de plus de 4 et 7 ou moins sur le produit fibreux, simultanément, ou après un pré-traitement avec, un composé polymère (2a) comprenant (A) un motif monomère dérivé d'un composé représenté par la formule (1), ou un sel d'acide ou un sel quaternaire de celui-ci, et (2-B) un motif monomère dérivé d'un composé représenté par la formule (2-2) dans un rapport molaire de (A)/(2-B) = 10/90 à 99/1 : 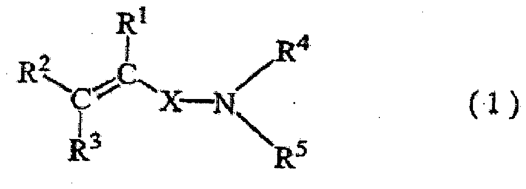 (dans la formule (1), R¹ et R² représentent chacun indépendamment un atome d'hydrogène ou un groupe méthyle ; R³ représente -COOM (M est un atome d'hydrogène ou un atome de métal alcalin) ou un atome d'hydrogène ; X représente -COO-R⁶-, -CONR⁷-R⁸-, ou -CH₂- ; R⁴ représente, lorsque X est -CH₂-, un groupe représenté par la formule (3) : 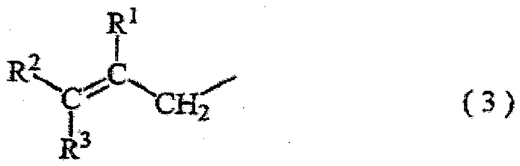 ou, lorsque X est l'un des autres groupes, un groupe alkyle ayant 1 à 3 atomes de carbone ou un groupe hydroxyalkyle ayant 1 à 3 atomes de carbone ; R⁵ représente un groupe alkyle ayant 1 à 3 atomes de carbone, un groupe hydroxyalkyle ayant 1 à 3 atomes de carbone, ou un atome d'hydrogène ; R⁶ et R⁸ représentent chacun indépendamment un groupe alkylène ayant 2 à 3 atomes de carbone ; et R⁷ représente un atome d'hydrogène ou un groupe alkyle ayant 1 à 3 atomes de carbone) ; 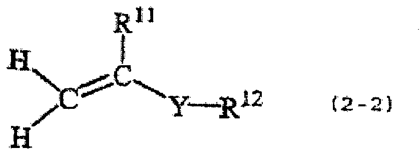 (dans laquelle R¹¹ représente un atome d'hydrogène ou un groupe alkyle ayant 1 à 3 atomes de carbone ; Y représente -O-CO-, -COO-, ou -CONR¹³- (R¹³ représente un atome d'hydrogène ou un groupe alkyle ayant 1 à 3 atomes de carbone) ; et R¹² représente un groupe alkyle linéaire ou ramifié ayant 12 à 22 atomes de carbone).

6. Composition assouplissante comprenant (2a) 0,01 à 15 % en masse d'un composé polymère comprenant (A) un motif monomère dérivé d'un composé représenté par la formule (1), ou un sel d'acide ou un sel quaternaire de celui-ci, et (2-B) un motif monomère dérivé d'un composé représenté par la formule (2-2) dans un rapport molaire de (A)/(2-B) = 10/90 à 99/1, (2b) 0,1 à 2,0 % en masse d'un composant de parfum ayant un ClogP de plus de 4 et 7 ou moins, et 3 à 50 % en masse d'un agent assouplissant, dans lequel un rapport des teneurs du composé polymère (2a) et de l'agent assouplissant est (2a)/agent assouplissant = 1/150 à 1/5 en rapport en masse : 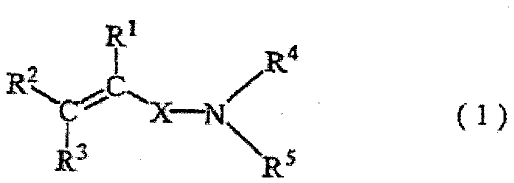 (dans la formule (1), R¹ et R² représentent chacun indépendamment un atome d'hydrogène ou un groupe méthyle ; R³ représente - COOM (M est un atome d'hydrogène ou un atome de métal alcalin) ou un atome d'hydrogène ; X représente -COO-R⁶-, -CONR⁷-R⁸-, ou -CH₂- ; R⁴ représente, lorsque X est -CH₂-, un groupe représenté par la formule (3) : 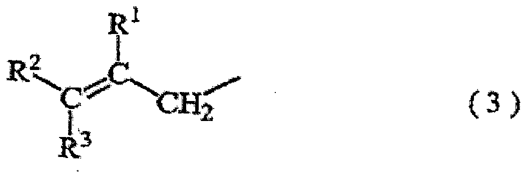 ou, lorsque X est l'un des autres groupes, un groupe alkyle ayant 1 à 3 atomes de carbone ou un groupe hydroxyalkyle ayant 1 à 3 atomes de carbone ; R⁵ représente un groupe alkyle ayant 1 à 3 atomes de carbone, un groupe hydroxyalkyle ayant 1 à 3 atomes de carbone, ou un atome d'hydrogène ; R⁶ et R⁸ représentent chacun indépendamment un groupe alkylène ayant 2 à 3 atomes de carbone ; et R⁷ représente un atome d'hydrogène ou un groupe alkyle ayant 1 à 3 atomes de carbone) ; 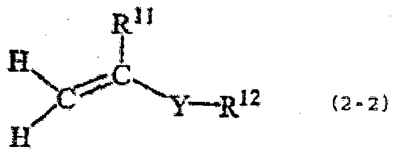 (dans laquelle R¹¹ représente un atome d'hydrogène ou un groupe alkyle ayant 1 à 3 atomes de carbone ; Y représente -O-CO-, -COO-, ou -CONR¹³- (R¹³ représente un atome d'hydrogène ou un groupe alkyle ayant 1 à 3 atomes de carbone) ; et R¹² représente un groupe alkyle linéaire ou ramifié ayant 12 à 22 atomes de carbone).
